# EUROPEAN PATENT APPLICATION

(11) **EP 4 187 082 A1**
(43) Date of publication of application: **31.05.2023**
(21) Application number: 21210189.3
(22) Date of filing: 24.11.2021
(51) Int. Cl.: F03D 7/02

(54) **METHOD AND SYSTEM FOR PROTECTING WIND TURBINES**

(71) Applicant: Siemens Gamesa Renewable Energy A/S, 7330 Brande (DK)
(72) Inventor: Eriksen, Anders, 7400 Herning (DK); Ludvigsen, Jakob, 2650 Hvidovre (DK); Nielsen, Jesper Hjortshøj, 8260 Viby J (DK)
(74) Representative: SGRE-Association

(57) **Abstract**

There is described a method of protecting a wind turbine comprising a monitoring device, the method comprising (a) receiving a trigger signal from the monitoring device, the trigger signal indicating that a protective measure is to be applied, (b) starting a countdown for a predetermined countdown period and initiating a trigger signal evaluation process, (c) if the trigger signal evaluation process determines that the trigger signal is invalid before the countdown ends: ignoring the received trigger signal, and (d) if the countdown ends: apply the protective measure indicated by the trigger signal.

## Description

### Field of Invention

The present invention relates to the field of wind turbines, in particular methods of protecting wind turbines comprising a monitoring device. Furthermore, the present invention relates to a system for protecting a wind turbine, and to a wind turbine comprising such a system.

### Art Background

Modern wind turbines may include numerous protective monitoring components and systems, which interact and exchange data with wind turbine control systems and wind park control systems through network connections. Hence, such components and systems present a potential risk with regard to cyber-attacks. Accordingly, relying on determinations and information from such components to e.g., enter a safe mode or shut down operation of a wind turbine inevitably comes along with a risk of losing electric power production due to a cyber-attack. In particular such components and systems that are provided by third parties, i.e., neither by the wind turbine manufacturer nor by the wind turbine operator, present significant challenges in this regard. However, for a number of reasons, it may be highly desirable to be able to rely on such third-party components and systems in the protective monitoring of wind turbines.

There may therefore be a need for a way of protecting wind turbines against the above-mentioned risks relating to cyber-attacks.

### Summary of the Invention

This need may be met by the subject matter according to the independent claims. Advantageous embodiments of the present invention are described by the dependent claims.

According to a first aspect of the invention, there is provided a method of protecting a wind turbine comprising a monitoring device. The method comprises (a) receiving a trigger signal from the monitoring device, the trigger signal indicating that a protective measure is to be applied, (b) starting a countdown for a predetermined countdown period and initiating a trigger signal evaluation process, (c) if the trigger signal evaluation process determines that the trigger signal is invalid before the countdown ends: ignoring the received trigger signal, and (d) if the countdown ends: apply the protective measure indicated by the trigger signal.

This aspect of the invention is based on the idea that a countdown period is started when a trigger signal is received from a monitoring device such that a trigger signal evaluation process can take place during the countdown period. If, before the countdown period ends, the result of the trigger signal evaluation process is that the trigger signal is invalid, then the received trigger signal is ignored in the sense that the corresponding protective measure is not applied. If, on the other hand, the countdown period ends, e.g., because the trigger signal evaluation process did not determine any problems associated with the trigger signal, then the protective measure indicated by the trigger signal is applied to the operation of the wind turbine.

In other words, instead of reacting immediately on the received trigger signal by applying the corresponding protective measure, a countdown period is inserted between receipt of the trigger signal and application of the protective measure such that it can be evaluated whether the trigger signal is valid or invalid.

According to an embodiment of the invention, the predetermined countdown period is determined in dependency of the received trigger signal.

The length of the countdown period may in particular be determined in dependency of the apparent cause of the trigger signal. Thereby, a trigger signal indicating a serious problem that can cause considerable damage to the wind turbine may result in a shorter countdown period than a trigger signal indicating a less serious problem.

In other words, the countdown period is determined as a trade-off between the urgency of the apparent problem and the need for time to evaluate the validity of the trigger signal.

According to a further embodiment of the invention, the predetermined countdown period is equal to or longer than a predetermined minimum countdown period.

The minimum countdown period sets a global lower limit for the countdown period in order to prevent misuse.

According to a further embodiment of the invention, the trigger signal evaluation process comprises performing a trigger analysis algorithm.

The trigger analysis algorithm allows an automatic (or at least semi-automatic) evaluation of whether the trigger signal is trustworthy or not.

According to a further embodiment of the invention, the trigger analysis algorithm comprises statistical analysis of a history of trigger signals received during a predetermined period of time.

Thereby, cases where e.g., several similar trigger signals are sent from the same monitoring device of a certain wind turbine or from corresponding monitoring devices of several wind turbines within a wind farm can be easily and efficiently detected.

According to a further embodiment of the invention, the trigger signal evaluation process comprises transmitting a notification to an operator or a global monitoring center.

The operator may be located at a wind farm, such at in a wind park control center, or at another location. The operator may receive the notification on a computer or on a mobile device, such as a smartphone.

Once notified, the operator may evaluate the validity of the trigger signal, e.g., by considering any other available data relating to operation of the wind turbine, the wind farm, and other trigger signal events. The operator may perform the evaluation manually. Alternatively, the operator may, partially or fully, rely on automated evaluation algorithms.

The global monitoring center may be a remote entity that is monitoring operation of several wind turbines and/or several wind farms.

According to a further embodiment of the invention, the notification comprises data associated with the trigger signal.

The data may in particular assist the operator in identifying the monitoring device from which the trigger signal originates. Furthermore, the data may contain information regarding the apparent error, as well as its cause and seriousness, etc.

According to a further embodiment of the invention, the notification comprises data associated with a state of operation of the wind turbine.

In other words, the data may contain information regarding the operation state of the wind turbine, such as a number of operational parameter values.

According to a further embodiment of the invention, determining that the trigger signal is invalid comprises receiving a countdown abort command from the operator.

If the operator (or the global monitoring center) determines that the trigger signal is invalid, e.g., because the indicated fault does not appear to correspond to other operational data of the wind turbine, or because other indications for a cyber attack exist, then the operator (or the global monitoring center) sends a countdown abort command which causes abortion of the countdown - and thereby of the trigger signal evaluation process.

According to a further embodiment of the invention, the trigger signal evaluation process comprises extending the countdown with a predetermined amount of additional time in response to receiving a snooze command from the operator or the global monitoring center.

If the operator (or global monitoring center) considers more time to be necessary in order to evaluate the validity of the trigger signal, he (it) may send a snooze command resulting in an extension of the countdown period with a predetermined amount of additional time. The predetermined amount of additional time may depend on the particular error asserted by the trigger signal as well as on the apparent seriousness of the error. The amount of additional time may furthermore be limited by a global maximum value that prevents extension of the countdown period beyond a certain amount of time.

According to a further embodiment of the invention, ignoring the received trigger signal comprises aborting the countdown. Aborting the countdown is a simple way of ignoring the trigger signal. However, other implementations may also be possible.

According to a further embodiment of the invention, the protective measure is selected from the group consisting of an emergency shut down of the wind turbine, a normal shut down of the wind turbine, a curtailed operational mode, and an idling mode.

According to a second aspect of the invention, there is provided a system for protecting a wind turbine, the system comprising (a) a communication interface configured to communicate with a monitoring device, and (b) a processing unit coupled to the communication interface and configured to perform the method according to the first aspect or any of the embodiments thereof described above.

This aspect of the invention is generally based on the same idea as the first aspect discussed above and provides a system capable of protecting a wind turbine by performing the methods of the first aspect.

It should be noted that the protective system may be provided as one or more separate hardware units or as a functional unit that is an integral part of the wind turbine controller.

According to a third aspect of the invention, there is provided a wind turbine comprising a system according to the second aspect.

This aspect of the invention provides a wind turbine utilizing a system according to the second aspect for protection against invalid trigger signals.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a functional block diagram of a method of protecting a wind turbine in accordance with an embodiment.
Figure 2 shows a wind park comprising wind turbines in accordance with an embodiment.

### Detailed Description

The illustration in the drawing is schematic. It is noted that in different figures, similar or identical elements are provided with the same reference numerals or with reference numerals which differ only within the first digit.

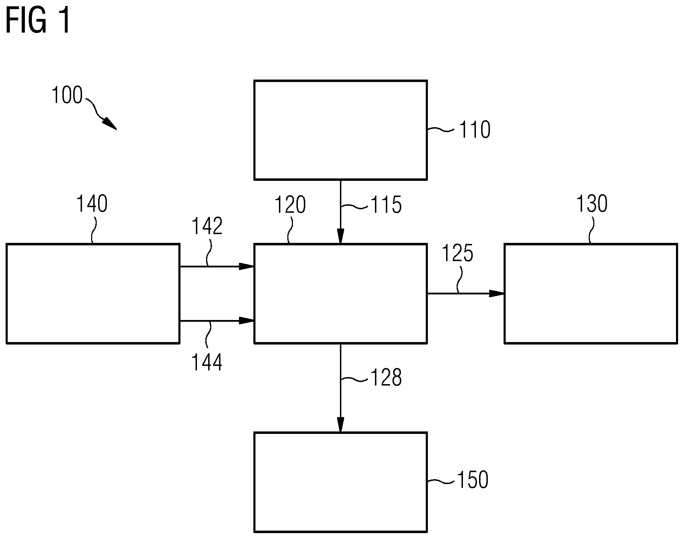

Figure 1 shows a functional block diagram 100 of a method of protecting a wind turbine in accordance with an embodiment. The wind turbine monitoring device 110 transmits a trigger signal 115 indicating that a protective measure, such as immediate shut-down of the wind turbine, must be applied. The trigger signal 115 is received by a wind turbine protective system 120 which responds by (i) starting a countdown (for a predetermined countdown period, e.g., four hours) and (ii) initiating a trigger signal evaluation process in order to determine whether the trigger signal is valid or invalid (e.g., caused by a cyber-attack on the monitoring device).

The predetermined countdown period may depend on the received trigger signal, in particular it may depend on the severity of the fault or situation indicated by the trigger signal. Furthermore, in order to prevent misuse, the predetermined countdown period should not be less than a predetermined minimum countdown period.

The trigger signal process involves performing a trigger signal analysis algorithm in the system 120. The trigger signal analysis algorithm may involve statistical analysis of the trigger signal and a trigger signal history, i.e., trigger signals received from the same or other monitoring devices during a predetermined period of time in the past.

The trigger signal process further involves transmission of a notification 125 to an external device 130, such as a wind park controller, a hand-held device, a remote supervising device (referred to as WPS or Wind Power Supervisor by some manufacturers), or a global monitoring center. The notification typically contains data associated with the trigger signal and/or with a state of operation of the wind turbine such that an operator may evaluate the situation, in particular the validity of the trigger signal.

The operator and/or the trigger signal evaluation algorithm may transmit various commands 140 to the system 120. In particular, if it is determined that the trigger signal is invalid, a "cancel" command 142 may be transmitted to the system 120. The "cancel" command 142 causes the system 120 to abort the countdown and any other processing in relation to the received trigger signal 115. If applicable, the trigger signal history data is updated correspondingly. Another possibility is that the operator and/or the trigger signal evaluation algorithm transmits a "snooze" command 144 indicating that more time is needed to fully evaluate the situation. Depending on the severity of the situation implied by the trigger signal 115, the system 120 may in response extend the countdown period with a certain amount of time.

If the countdown ends, the system 120 considers the trigger signal to be valid and transmits a corresponding command 128 to the wind turbine controller 150, which in response applies the safety measure (such as initiating an emergency shut down of the wind turbine, initiating a normal shut down of the wind turbine, entering a reduced power production mode, or entering an idling mode) needed to accommodate the trigger signal 115.

It should be noted that although the system 120 and wind turbine controller 150 are illustrated as separate units, the system 120 is preferably a functional unit implemented within the wind turbine controller 150. The system 120 may be configured as a separate hardware and/or software unit or as software running on the wind turbine controller 150.

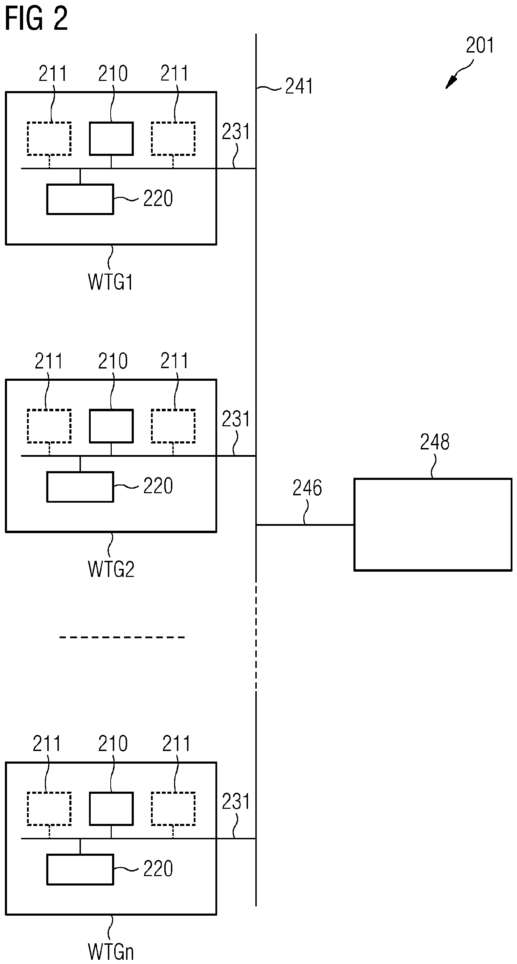

Figure 2 shows a wind park 201 comprising wind turbines WTG1, WTG2, WTGn in accordance with an embodiment. Each wind turbine WTG1, WTG2, WTGn in the wind park 201 comprises a monitoring device 210 and a protective system 220 which are both connected to a communication network interface 231. Optionally, the wind turbines WTG1, WTG2, WTGn comprise further monitoring devices 211 which, if applicable, are also connected to the communication network interface. The monitoring devices 210, 211 may in particular be third-party devices for monitoring various aspects of a wind turbine.

The communication network interfaces 231 of the wind turbines WTG1, WTG2, WTGn are connected to a wind park data communication network 241. An external device 248, such as a wind park controller, handheld device, a monitoring facility, etc., is connected to the wind park data communication network 241 through wired or wireless data connection 246.

In operation, the monitoring devices 210 and optional monitoring devices 211 interact with the respective protective systems 220 and the external device 248 (and a corresponding operator) to perform the method described above in conjunction with Figure 1.

It is noted that the term "comprising" does not exclude other elements or steps and the use of the articles "a" or "an" does not exclude a plurality. Elements described in association with different embodiments may also be combined. It is further noted that reference signs in the claims are not to be construed as limiting the scope of the claims.

## Claims

1. A method of protecting a wind turbine comprising a monitoring device, the method comprising:
receiving a trigger signal from the monitoring device, the trigger signal indicating that a protective measure is to be applied,
starting a countdown for a predetermined countdown period and initiating a trigger signal evaluation process,
if the trigger signal evaluation process determines that the trigger signal is invalid before the countdown ends: ignoring the received trigger signal, and
if the countdown ends: apply the protective measure indicated by the trigger signal.

2. The method according to the preceding claim, wherein the predetermined countdown period is determined in dependency of the received trigger signal.

3. The method according to any one of the preceding claims, wherein the predetermined countdown period is equal to or longer than a predetermined minimum countdown period.

4. The method according to any one of the preceding claims, wherein the trigger signal evaluation process comprises performing a trigger analysis algorithm.

5. The method according to the preceding claim, wherein the trigger analysis algorithm comprises statistical analysis of a history of trigger signals received during a predetermined period of time.

6. The method according to any one of the preceding claims, wherein the trigger signal evaluation process comprises transmitting a notification to an operator or a global monitoring center.

7. The method according to the preceding claim, wherein the notification comprises data associated with the trigger signal.

8. The method according to claim 6 or 7, wherein the notification comprises data associated with a state of operation of the wind turbine.

9. The method according to any one of claims 6 to 8, wherein determining that the trigger signal is invalid comprises receiving a countdown abort command from the operator or the global monitoring center.

10. The method according to any one of claims 6 to 9, wherein the trigger signal evaluation process comprises extending the countdown with a predetermined amount of additional time in response to receiving a snooze command from the operator or the global monitoring center.

11. The method according to any one of the preceding claims, wherein ignoring the received trigger signal comprises aborting the countdown.

12. The method according to any one of the preceding claims, wherein the protective measure is selected from the group consisting of an emergency shut down of the wind turbine, a normal shut down of the wind turbine, a curtailed operational mode, and an idling mode.

13. A system for protecting a wind turbine, the system comprising
a communication interface configured to communicate with a monitoring device, and
a processing unit coupled to the communication interface and configured to perform the method according to any one of the preceding claims.

14. A wind turbine comprising a system according to the preceding claim.
